# EUROPÄISCHE PATENTANMELDUNG

(11) **EP 0 537 588 A2**
(43) Veröffentlichungstag der Anmeldung: **21.04.1993**
(21) Anmeldenummer: 92116990.0
(22) Anmeldetag: 05.10.1992
(51) Int. Cl.: H04J 3/06, H04J 3/16

(54) **Zeitmultiplex - Übertragungssystem für unterschiedliche Datendienste**

(30) Priorität: 17.10.1991 DE 4134360
(71) Anmelder: ROBERT BOSCH GMBH, 70442 Stuttgart (DE)
(72) Erfinder: Reim, Albrecht, Dipl.-Ingenieur, W-7150 Backnang (DE)

(57) **Zusammenfassung**

Bei einem Zeitmultiplex-Übertragungssystem werden Teilnetze über eine Verzweigung (MBU) miteinander verknüpft. Dieser Verzweigung (MBU) ist eine Laufzeitausgleichseinheit (LZS) zugeordnet, die unterschiedliche Laufzeiten in Teilnetzen ausgleicht.

Unterschiedliche Datendienste (L,P) können kollisionsfrei und aufwandsarm in einem solchen Übertragungssystem übertragen und vermittelt werden, wobei die Laufzeitausgleichseinheit (LZS) dafür sorgt, daß die unterschiedlichen Datendienste mit unterschiedlicher Verzögerung beziehungsweise in verschiedener Reihenfolge zu einem Summendatenstrom aufbereitbar sind, welcher parallel in alle Teilnetze eingespeist werden kann.

## Beschreibung

Die Erfindung geht aus von einem Übertragungssystem gemäß dem Oberbegriff des Patentanspruchs 1.

Aus NTG Fachberichte, Band 80, März 1982, Seiten 157 bis 164 ist ein digitales Zeitmultiplex - Übertragungssystem bekannt, welches als linien- wie auch als sternförmiges Verzweigungsnetz aufgebaut werden kann. An eine zentrale Busstation werden dezentrale Busstationen beispielsweise über jeweils ein Schleifennetz angeschlossen. An die dezentralen Busstationen können jeweils mehrere Teilnehmer angeschlossen werden. Jeder Teilnehmer kann in diesem DIKOS-System gleichberechtigt einen Verbindungswunsch absetzen. Der die dezentralen Busstationen eines Teilnetzes verbindende Bus besteht aus einer Sende- und einer Empfangsleitung.

Die von den Busstationen in eine Sendeleitung eingespeisten Informationen werden an einer Datenumleitstelle in die Empfangsleitung der jeweiligen Teilnezte umgeleitet, aus der die Busstationen die an sie gerichteten Daten entnehmen. Die Übertragung erfolgt im Zeitmultiplex, so daß dieses System eine Taktzentrale und einen Rahmensynchronisiergenerator erfordert, die zweckmäßigerweise in der zentralen Busstation untergebracht sind. Jeder Sendeleitung ist eine Laufzeitausgleichseinheit in Form eines Laufzeitspeichers zugeordnet, der die Laufzeitunterschiede zwischen dem Rahmen auf der Sendeleitung und dem Rahmen vom Rahmensynchronisiergenerator anpasst. Jede Teilnehmerstation empfängt die Summe aller im Netz vorhandenen Daten, wertet jedoch nur diejenigen aus, die an sie adressiert sind. Die von einer Busstation auszusendenen Daten werden bei DIKOS (s. auch NTZ, Band 34, 1981, Heft 10, Seite 658 bis 663) stets im gleichen Zeitkanal auf der Sendeleitung eingespeist und damit auf dem gleichen Zeitkanal (Zeitschlitz) wiedergefunden. Um Doppelbelegungen eines Zeitkanals zu vermeiden, sucht zu Beginn einer Verbindung der initiierende Teilnehmer auf der Empfangsleitung einen freien Zeitkanal und sendet, wenn dieser gefunden ist, im selben Zeitkanal der Sendeleitung einen Ruf an einen gewünschten anderen Teilnehmer. Die Summe aller übertragenen Daten wird in der gleichen Reihenfolge auf der Empfangsleitung zu den Teilnehmern übertragen.

In lokalen Schleifennetzen mit einer vorgegebenen Zeitmultiplexrahmenstruktur müssen im Hinblick auf die Datenübertragungsmenge und auf die Datenübertragungsgeschwindigkeit sowie hinsichtlich des Übertragunsverfahrens eine angepaßte Anzahl von unterschiedliche Kommunikationsarten verarbeitende Endgeräte in beliebiger Kombination zueinander anschließbar sein.

Nachteilig dabei ist, daß in der zentralen Busstation durch die Zusammenführung der einzelnen Sendeleitungen Kollisionen auftreten, da die aktuelle Zeitkanalbelegungen nur über die Empfangsleitung ermittelt werden kann. Bei leitungsvermittelten Diensten, wie z. B. Fernsprechen, ist der eigentlichen Nachrichtenübermittlungsphase eine Verbindungsaufbauphase vorgeschaltet, in der die Kollisionen erkannt und aufgelöst werden. Für den paketvermittelten Datendienst, insbesondere die nach paketorientierten Zugriffsverfahren, wie z. B. CSMA/CD oder Token, arbeiten, wäre deshalb eine Flußsteuerung in den dezentralen Bussteuerungen erforderlich, die bei den erhöhten Signallaufzeiten in einem solchen Kommunikationsnetz zu einem schlechten Datendurchsatz führt. Solche Flußsteuerungen sind beispielsweise aus WO 82/02465, WO 84/04435, WO 90/16121 oder DE 3614062 A1 bekannt.

Aufgabe vorliegender Erfindung ist es, Nachteile bekannter Systeme zu überwinden. Insbesondere sollen bei sternförmigen und sternförmig-verzweigten Konfigurationen einerseits die Kollisionen von Datenpaketen möglichst gering gehalten werden und andererseits eine zusätzliche Flußsteuerung in den sendenden dezentralen Busstationen vermieden werden. Diese Aufgabe wird durch die Merkmale des Patentanspruchs 1 gelöst. Die weiteren Ansprüche zeigen vorteilhafte Weiterbildungen auf.

Durch die erfindungsgemäße Lösung werden mit Reduzierung der Signallaufzeiten im Übertragungsnetz die Anzahl der Kollisionen reduziert, so daß die sendewilligen Busstationen die Belegung der für die Datenübertragung auf den Sendeleitungen vorgesehenen Kanäle (Bereiche) möglichst unverzögert über die Empfangsleitung erkennen können. Ein weiteres Merkmal der hier angewandten sternförmigen und sternförmig-verzweigten Netzstrukturen, nämlich die Sendeleitungen an einer oder mehreren Stellen im Netz zusammenzufassen, sowie an einer Stelle im Netz die Summendaten aus allen Sendeleitungen parallel in die Empfangsleitungen zu verzweigen, erlaubt es, Sendeleitungen durch Abtrennen aus der Summenbildung auszuschließen und so Störungen in anderen Leitungsabschnitten zu vermeiden.

Insbesondere für Dienste mit paketorientierten Zugriffsverfahren vereinfacht sich der Aufwand und der Kommunikationsablauf. Das System ist flexibel und kann sich ohne großen Aufwand an unterschiedliche Kommunikationsbedürfnisse anpassen. Unterschiedliche Dienste können ungestört und ohne nachteilige gegenseitige Beeinflussung nebeneinander betrieben werden.

Die Erfindung wird nun anhand einiger Ausführungsbeispiele näher erläutert. Es zeigen im einzelnen:
Fig.1 ein Blockschaltbild eines sternförmigen Kommunikationsnetzes, welches zur Durchführung der Maßnahmen der Erfindung geeignet ist,
Fig.2 ein Blockschaltbild eines sternförmig-verzweigten Kommunikationsnetzes zur Durchführung der Maßnahmen gemäß der Erfindung,
Fig.3 einen Zeitmultiplexrahmenaufbau,
Fig.4a den Aufbau einer zentralen Busstation,
Fig.4b den Aufbau einer dezentralen Busstation und
Fig.5 ein Zeitdiagramm für die Zusammenfassung der Zeitkanäle leitungs- und paketorientierter Dienste zu einem Summendatenstrom.

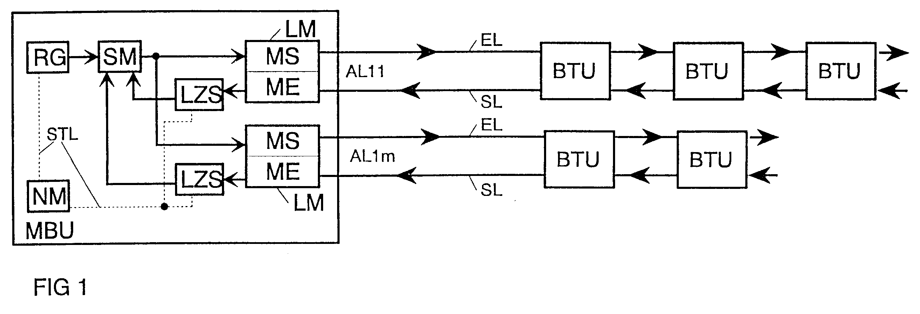

Die Fig.1 zeigt ein sternförmiges Kommunikationssystem, aufgebaut mit den Systembausteinen zentrale Busstation MBU als Verzweigungseinheit und dezentrale Busstation BTU innerhalb der Teilnetze. Alle Busstationen sind über eine Sendeleitung SL und eine Empfangsleitung EL miteinander verbunden. Die zentrale Busstationen MBU hat ausschließlich die Funktion eines Mastertaktes und legt durch das periodische Aussenden der Rahmenkennungsworte in die Empfangsleitungen den Zeitmultiplexrahmen fest. Jede dezentrale Busstation ist mit einem Sync-Reflex ausgerüstet, der in der letzten dezentralen Busstation am Ende jeder Übertragungsleitung AL automatisch aktiviert wird und den leeren Zeitmultiplexrahmen mit dem Systemtakt, abgeleitet aus dem Takt der Empfangsleitung, in die Sendeleitung aussendet.

Die von den dezentralen Busstationen BTU auszusendenden Daten werden auf die Sendeleitung SL gegeben. In der zentralen Busstation mit Masterfunktion MBU werden die Daten in den jeder Sendeleitung SL zugeordneten Laufzeitausgleicheinheiten, z. B. Laufzeitspeichern LZS so verzögert, daß sie, vom Rahmensynchronisiergenerator RG gesteuert, takt- und rahmensynchron ausgelesen und über das Summiermodul SM parallel in alle Empfangsleitungen EL wieder ausgesendet werden. Jede dezentrale Busstation BTU empfängt so die Summe aller in Netz gesendeten Daten, wertet jedoch nur diejenigen aus, die für sie bestimmt sind.

Jeder Empfangs- und Sendeleitung ist ein Leitungsmodul LM zugeordnet, bestehend aus jeweils einer Sendeeinheit MS und einer Empfangseinheit ME. Sowohl der Rahmengenerator RG als auch die Laufzeitspeicher LZS werden über Steuerleitungen STL von einer Steuereinrichtung (Netzwerk Management) NM gesteuert. Für die Summiereinrichtung SM kann wie z. B. in NTZ, Band 34, 1981, Heft 10, Seite 661, Bild 7 aufgezeigt, eine Verknüpfungseinrichtung bestehend aus zwei ODER-Gattern verwendet werden. Die Teilnehmer z. B. Fernsprecheinrichtungen, Datenterminals, Rechner die miteinander in Verbindung treten wollen, sind (nicht dargestellt) jeweils an eine der dezentralen Busstationen BTU angeschlossen.

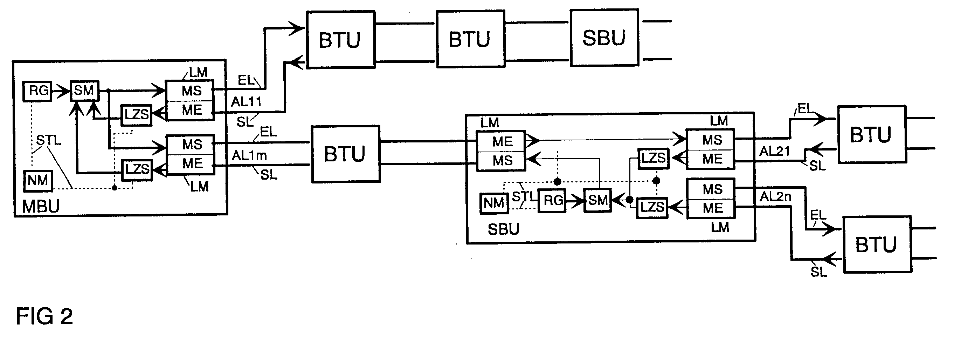

Wie in Fig.2 dargestellt, wird durch Einfügen weiterer zentraler Busstationen SBU in einzelnen Übertragungsleitungen ein sternförmiges Kommunikationsnetz zu einem sternförmigverzweigten Kommunikationsnetz erweitert. Die Masterfunktion der zentralen Busstation MBU, wie in Fig.1 beschrieben, mit dem Summiermodul SM zur Bildung der Summeninformation und parallelem Aussenden in alle Empfangsleitungen bleibt erhalten. Weitere ins Netz eingefügte zentrale Busstationen SBU werden als Slavestation betrieben und synchronisieren sich mit dem Rahmensynchronisiergenerator RG auf den von der zentralen Busstation MBU über die Empfangsleitung EL der Anschlußleitung AL1n empfangenen Mastertakt und senden die empfangenen Daten parallel in alle Empfangsleitungen EL der weiterführenden Anschlußleitungen AL21 bis AL2n. Die Daten der Sendeleitungen SL der Anschlußleitungen AL21 bis AL2n werden in den zugeordneten Laufzeitspeichern LZS so verzögert, daß sie, vom als slavegetakteten Rahmensynchronisiergenerator RG gesteuert, takt- und rahmensynchron ausgelesen und über das Summiermodul SM in die abgehende Sendeleitung SL der Anschlußleitung AL1n ausgesendet und der zentralen Busstation MBU zugeführt werden. Die Laufzeitausgleichseinheit in Form der Laufzeitspeicher LZS ergänzt die Laufzeitunterschiede der Teilnetze jeweils auf ein ganzzahliges Vielfaches der Zeitmultiplex-Rahmendauer.

Die unterschiedlichen Arbeitsweisen von zentralen Busstationen MBU und SBU lassen sich manuell voreinstellen oder werden vom Netzmanagement NM bei der Netzkonfiguration, z. B. softwaregesteuert automatisch festgelegt.

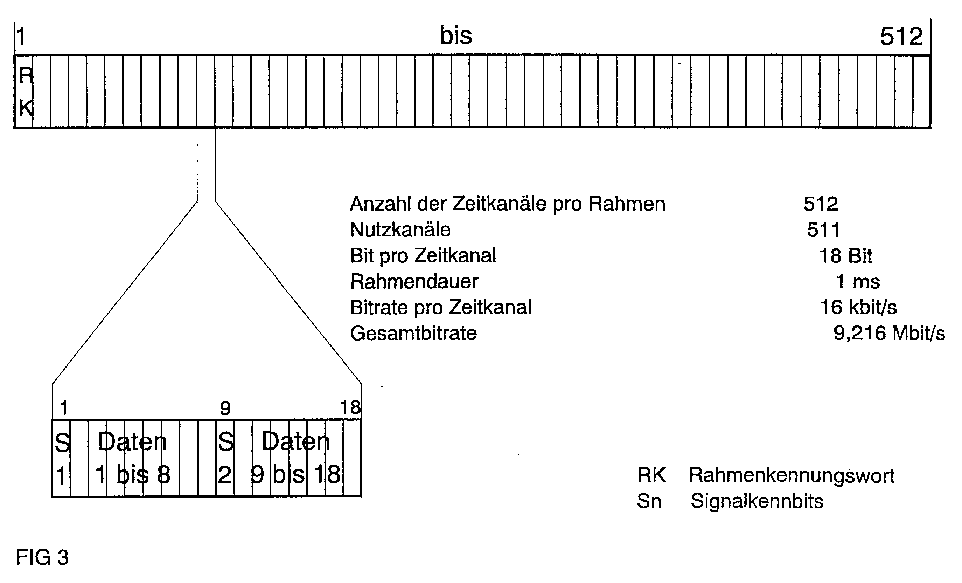

In dem aufgeführten Beispiel zeigt Fig.3 einen Zeitmultiplexrahmen von 512 Zeitkanälen zu der Informationsübertragung im Kommunikationssystem. Jeder Zeitkanal ist ein Time-Division-Multiple-Access-Kanal von z. B. 16 kbit/s. Der erste Zeitkanal enthält das Rahmenkennungswort RK. Die restlichen Zeitkanäle stehen der Nachrichtenübermittlung zur Verfügung. Den an die dezentralen Busstationen BTU angeschalteten Endeinrichtungen (Teilnehmer) werden die Zeitkanäle nur für die Dauer der Nachrichtenverbindung zugeordnet. Deshalb ist jeder Nachrichtenverbindung eine Signalisierphase vor- und nachgeschaltet. Die Signalisierinformationen, gekennzeichnet durch die Signalkennbits Sn (S1 u. S2), werden als Inbandsignalisierung im gleichen Zeitkanal oder Zeitkanäle übermittelt, in dem anschließend die Informationen übertragen werden. Kollisionen werden in der Signalisierphase erkannt und sofort aufgelöst, bestehende Nachrichtenverbindungen werden dabei nicht beeinträchtigt. Diese Anordnung und Arbeitsweise der zeitlich zugeordneten Zeitkanalbelegung ist besonders vorteilhaft für leitungsvermittelte Dienste, d. h. die Zeit der Nachrichtenübermittlungsphase sollte möglichst groß gegenüber der Signalisierphase sein.

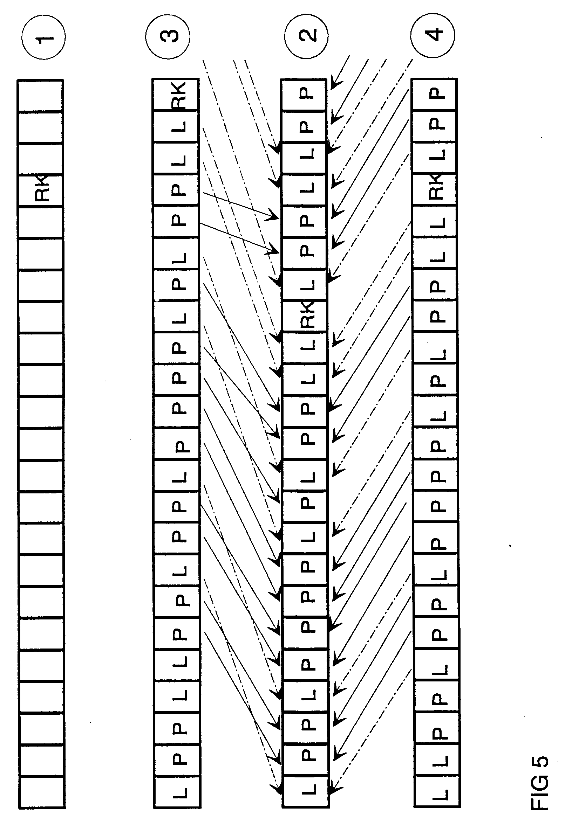

Für paketorientierte Dienste mit kurzen Nachrichtenübermittlungszeiten, d. h. kurzen Nachrichtenpaketen, wie z. B. Datenendgeräte, die nach dem CSMA/CD- oder Token-Zugriffsverfahren arbeiten, sind die Verzögerungszeiten, bestehend aus der Signallaufzeit im Übertragungsnetz und der Flußsteuerung (z. B. vorgeschalteter Signalisierphase wie bei leitungsvermittelten Diensten) störend und reduzieren den Datendurchsatz durch ein solches Kommunikationssystem. Deshalb werden diese Dienste jeweils mit geringster Verzögerung in die nächsten für sie reservierten freien Zeitkanäle des Zeitmultiplexrahmens eingefügt, wie im Zusammenhang mit Fig.5 noch näher erläutert wird.

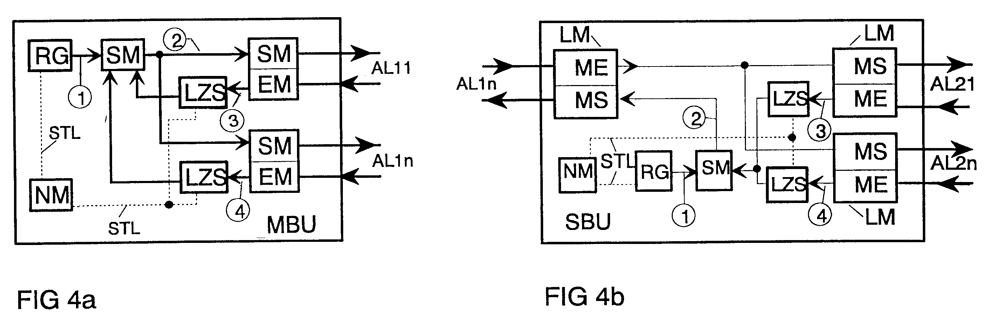

In einem Kommunikationssystem mit einer zentralen Busstation MBU gemäß Fig. 4a und dezentralen Busstation SBU gemäß Fig.4b werden leitungsvermittelte und paketorientierte Dienste nebeneinander in zugeordneten Dienste-Bereichen, bestehend jeweils aus einem oder mehreren Zeitkanälen innerhalb eines Zeitmultiplexrahmens nach einem vorgegebenen Muster untergebracht. Die Bereiche sind voneinander unabhängig und untereinander nicht beeinflußbar. In der zentralen Busstation MBU werden die Daten der Sendeleitungen SL über die Empfangsmodule EM der Leitungsmodule LM den Laufzeitspeichern LZS zugeführt. Vom Rahmensynchronisiergenerator RG gesteuert, werden takt- und rahmensynchron aus allen Laufzeitspeichern LZS die Daten ausgelesen, dem Summiermodul SM parallel zugeführt und zu einem Summenbitstrom zusammengefaßt, welcher in der einfachsten Weise mit einer Oder-Funktion realisiert sein kann, und anschließend parallel in alle Empfangsleitungen EL der Anschlußleitungen AL11 bis AL1n übertragen wird. Die dazugehörenden Zeitablaufdiagramme in Fig.5 zeigen die Datenabläufe an den mit den Zahlen 1 bis 4 markierten Stellen der zentralen Busstation MBU. So zeigt Stelle 1 den leeren Zeitmultiplexrahmen vom Rahmensynchronisiergenerator RG. Die Stellen 3 und 4 zeigen die in die Laufzeitspeicher eingelesenen Multiplexsignale zweier Sendeleitungen SL mit unterschiedlichen Signallaufzeiten und der Zeitkanalbelegung mit Daten von leitungsvermittelten Endgeräten, gekennzeichnet mit L (z. B. Fernsprechteilnehmer), und paketorientierten Endgeräten, gekennzeichnet mit P (z. B. Datenteilnehmer). In Stelle 2 ist dargestellt, in welcher Reihenfolge die Zeitkanalinhalte der sendeleitungen SL über die Laufzeitspeicher LZS ausgelesen, im Summiermodul SM mit dem leeren Zeitmultiplexrahmen vom Rahmensynchronisiergenerator RG zusammengefaßt werden und anschließend als Summeninformation parallel in alle Empfangsleitungen EL ausgesendet werden. Hieraus ist ersichtlich, daß die Lage der Zeitkanal-Inhalte von leitungsvermittelten Diensten, gekennzeichnet mit L, im Zeitmultiplexrahmen bei der Summenbildung nicht umgesetzt werden, dagegen die Informationen aus den Zeitkanälen für paketorientierte Dienste, gekennzeichnet mit P, mit geringster Verzögerung in die nächsten für diesen Dienst reservierten freien Zeitkanäle eingefügt werden.

Bei den slavegesteuerten zentralen Busstationen SBU gemäß Fig.4b wird die Summenbildung und Zeitkanalsteuerung nach den gleichen Regeln wie in der MBU durchgeführt, wobei die Zeitablaufdiagramme in Fig.5 folgende Bedeutung haben:
- Stelle 1 zeigt den leeren Zeitmultiplexrahmen vom slavegetakteten Rahmensynchronisiergenerator RG,
- Stelle 3 und 4 zeigen die in die Laufzeitspeicher LZS eingelesenen Multiplexsignale zweier Sendeleitungen SL der Anschlußleitungen AL21 und AL2n mit unterschiedlichen Signallaufzeiten,
- Stelle 2 zeigt die Summenbildung der Zeitkanalinhalte der beiden Sendeleitungen SL, die über die Sendeleitung SL der Anschlußleitung AL1n zur zentralen Busstation MBU ausgesendet wird.

Für paketorientierte Dienste wird in der Regel ein Breitbandkanal benötigt, der im Zeitmultiplexrahmen aus den Zeitkanälen (n = 1, 2, 3 usw.) gebildet wird, wobei die Zeitkanäle zweckmäßigerweise über den Zeitmultiplexrahmen möglichst gleichmäßig verteilt werden. In einem Zeitmultiplexrahmen lassen sich ein oder mehrere Bereiche für Dienste mit unterschiedlichen Kanalzugriffsverfahren einrichten und ungestört nebeneinander betreiben. Die Größe der Bereiche (Bandbreiten) können fest programmiert oder softwaregesteuert über das Netzmanagement eingestellt oder in Abhängigkeit des Datenaufkommens im Betrieb automatisch verändert werden.

## Patentansprüche

1. Zeitmultiplex - Übertragungssystem für unterschiedliche Datendienste, bestehend aus mehreren Teilnetzen mit jeweils einem Datenbus (EL,SL) über den Teilnehmer Daten empfangen und absenden, wobei mindestens eine Verzweigung (MBU,SBU) vorgesehen ist, der eine Laufzeitausgleichseinheit (LZS) zugeordnet ist zur Verzögerung von Daten mindestens eines Datenbusses (EL,SL), und wobei aus den Daten mindestens zweier Teilnetze ein Summendatenstrom gebildet ist, der parallel in Teilnetzte einspeisbar ist, dadurch gekennzeichnet, daß die Laufzeitausgleichseinheit (LZS) so ausgebildet oder so steuerbar ist, daß für unterschiedliche Datendienste (P,L) unterschiedliche Verzögerungen für die Bildung des Summendatenstroms bereitgestellt werden.

2. Übertragungssystem nach Anspruch 1, dadurch gekennzeichnet, daß die unterschiedlichen Datendienste (P,L) in unterschiedlicher Reihenfolge über die Laufzeitausgleichseinheit (LZS) zusammenfügbar sind.

3. Übertragungssystem nach Anspruch 1 oder 2, dadurch gekennzeichnet, daß die Laufzeitausgleichseinheit (LZS) die Laufzeitunterschiede der Teilnetze jeweils auf ein ganzzahliges Vielfaches der Zeitmultiplex-Rahmendauer ergänzt.

4. Übertragungssystem nach einem der Ansprüche 1 bis 3, dadurch gekennzeichnet, daß die unterschiedlichen Datendienste (P,L) voneinander unabhängig nach einem vogegebenen Muster im Zeitmultiplexrahmen untergebracht sind.

5. Übertragungssystem nach Anspruch 4 dadurch gekennzeichnet, daß das vorgegebene Muster aus Zeitkanälen innerhalb eines Zeitmultiplexrahmens gebildet ist, wobei die Zuordnung der unterschiedlichen Datendienste (P,L) auf diese Zeitkanäle veränderbar ist.

6. Übertragungssystem nach Anspruch 5, dadurch gekennzeichnet, daß einzelne oder mehrere Zeitkanäle eines Zeitmultiplexrahmens wahlweise in die Verzögerung durch die Laufzeitausgleichseinheit (LZS) einbeziehbar sind.

7. Übertragungssystem nach einem der Ansprüche 4 oder 5, dadurch gekennzeichnet, daß das vorgegebene Muster beziehungsweise die Zuordnung der Zeitkanäle auf die unterschiedlichen Datendienste (P,L) in Abhängigkeit des momentanen Datenaufkommens veränderbar ist.

8. Übertragungssystem nach einem der Ansprüche 1 bis 7, dadurch gekennzeichnet, daß die unterschiedlichen Datendienste paketorientierte (P) und leitungsvermittelte Dienste (L) sind.

9. Übertragungssystem nach Anspruch 8, dadurch gekennzeichnet, daß die paketorientierten Dienste (P) jeweils mit geringster Verzögerung in die nächsten für sie reservierten freien Zeitkanäle des Zeitmultiplex einfügbar sind.

10. Übertragungssystem nach einem der Ansprüche 1 bis 9, dadurch gekennzeichnet, daß die Teilnetze des Übertragungssystems schleifenförmig ausgebildet sind mit jeweils einer Empfangs (EL)- und einer Sendeleitung (SL) für die anschließbaren Teilnehmer, wobei jeweils eine Umleitstelle vorgesehen ist zur Umleitung der Daten von der Empfangsleitung (EL) auf die Sendeleitung (SL).

11. Übertragungssystem nach einem der Ansprüche 1 bis 10, dadurch gekennzeichnet, daß das Übertragungssystem ein mehrfach verzweigtes Netz aufweist mit zugeordneter Laufzeitausgleichseinheit (LZS) in jeder Verzweigung.

12. Übertragungssystem nach einem der Ansprüche 1 bis 11, dadurch gekennzeichnet, daß in einem sternförmigen oder einem sternförmig verzweigten Netz die Sendeleitungen (SL) an einer oder mehreren Stellen im Netz über die Verzweigungen (SBU) zusammengefasst sind und daß an einer Stelle (MBU) im Netz die Summendaten aus allen Sendeleitungen (SL) parallel in alle Empfangsleitungen (EL) einspeisbar sind.
